# EUROPÄISCHE PATENTANMELDUNG

(11) **EP 2 618 630 A2**
(43) Veröffentlichungstag der Anmeldung: **24.07.2013**
(21) Anmeldenummer: 13151634.6
(22) Anmeldetag: 17.01.2013
(51) Int. Cl.: H05B 3/00, F24D 3/00, F24D 9/00, F24J 2/00, A47J 37/00, F24C 1/00

(54) **Heizeinrichtung und Verfahren zum Betreiben einer Heizeinrichtung**

(30) Priorität: 19.01.2012 DE 102012001027
(71) Anmelder: FutureCarbon GmbH, 95448 Bayreuth (DE)
(72) Erfinder: Forero Dr., Stefan, 95466 Weidenberg (DE); Meinen, Tomas, 82049 Pullach (DE)
(74) Vertreter: Müller, Christian Stefan Gerd

(57) **Zusammenfassung**

Die vorliegende Erfindung betrifft eine Heizeinrichtung (10) und ein Verfahren zum Betreiben einer Heizeinrichtung (10), wobei die Heizeinrichtung (10) eine Heizfläche (11) aufweist, die mit Energie zur Erzeugung von Heizwärme versorgt wird. Um zu ermöglichen, dass die Heizfläche (11) nur partiell aktiviert werden kann, oder aber unterschiedliche Heizgrade an unterschiedlichen Stellen der Heizfläche (11) oder aber verschiedene Heizmuster realisiert werden können, ist vorgesehen, dass die Heizfläche (11) aus einer Anzahl von zwei oder mehr Heizelementen (12) gebildet ist, wobei die Heizelemente (12) insbesondere als flächige Heizelemente ausgebildet sind, und wobei jedes Heizelement (12) an wenigstens einer Energiequelle (13) zur Erzeugung von Heizwärme angeschlossen ist, oder eine Gruppe aus wenigstens zwei Heizelementen (12) an wenigstens einer gemeinsamen Energiequelle (13) zur Erzeugung von Heizwärme angeschlossen ist. Das Verfahren ist durch die Schritte gekennzeichnet, dass jedes Heizelement (12) oder jede Gruppe von Heizelementen (12) über eine eigene Energiequelle (13) zur Erzeugung von Heizwärme unabhängig von anderen Heizelementen (12) oder Gruppen von Heizelementen (12) mit Energie zur Erzeugung von Heizwärme versorgt wird.

## Beschreibung

Die vorliegende Erfindung betrifft zunächst eine Heizeinrichtung gemäß dem Oberbegriff von Patentanspruch 1. Weiterhin betrifft die Erfindung auch ein Verfahren zum Betreiben einer Heizeinrichtung.

Heizeinrichtungen der genannten Art sind im Stand der Technik bereits bekannt. Beispielsweise ist in der EP 1 924 125 A1 eine elektrisch heizbare Kunststoff-Folie beschrieben wobei die Kunststoff-Folie mindestens eine elektrisch leitfähige Schicht aufweist. Die Leitfähigkeit der Schicht wird durch das Vorhandensein elektrisch leitfähiger Additive in der leitfähigen Schicht erreicht, so dass ein flächiges Heizelement realisiert werden kann, Die elektrisch leitfähige Schicht wird zur Stromversorgung an die Kontakte einer Spannungsquelle angeschlossen.

Nachteilig bei dieser bekannten Lösung ist, dass immer nur die gesamte Fläche, und diese an allen Stellen auf gleiche Weise, beheizt werden kann, wobei es nicht möglich ist, die Heizfläche nur partiell zu aktivieren, oder aber unterschiedliche Heizgrade an unterschiedlichen Stellen der Schicht zu realisieren. Auch ist es nicht möglich, verschiedene Heizmuster zu realisieren.

Der vorliegenden Erfindung liegt deshalb die Aufgabe zugrunde, diese Nachteile zu umgehen.

Die Aufgabe wird erfindungsgemäß gelöst durch die Heizeinrichtung mit den Merkmalen gemäß dem unabhängigen Patentanspruch 1 sowie das Verfahren zum Betreiben einer Heizeinrichtung mit den Merkmalen gemäß dem unabhängigen Patentanspruch 12. Weitere Merkmale und Details der Erfindung ergeben sich aus den Unteransprüchen, der Beschreibung sowie den Zeichnungen. Dabei gelten Merkmale und Details, die im Zusammenhang mit der erfindungsgemäßen Heizeinrichtung beschrieben sind, selbstverständlich auch im Zusammenhang mit dem erfindungsgemäßen Verfahren, und umgekehrt.

Gemäß dem ersten Aspekt der Erfindung wird eine Heizeinrichtung bereitgestellt, aufweisend eine Heizfläche, die mit Energie zur Erzeugung von Heizwärme versorgt wird oder versorgbar ist. Die Heizeinrichtung ist erfindungsgemäß dadurch gekennzeichnet, dass die Heizfläche aus einer Anzahl von zwei oder mehr Heizelementen gebildet ist, dass die Heizelemente insbesondere als flächige Heizelemente ausgebildet sind, und dass jedes Heizelement an wenigstens einer Energiequelle zur Erzeugung von Heizwärme angeschlossen oder anschließbar ist.

Erfindungsgemäß wird eine Heizeinrichtung bereitgestellt. Hierbei handelt es sich insbesondere um eine Einrichtung, mittels derer Wärme erzeugt wird. Die Heizeinrichtung weist dazu eine Heizfläche auf. Die Heizfläche zeichnet sich insbesondere dadurch aus, dass sie in ihrer Ausdehnung eine äußere Begrenzung aufweist, wobei die Heizfläche insbesondere eine beliebige Größe und/oder Geometrie und/oder Kontur aufweisen kann. Innerhalb dieser Begrenzung ist die Heizfläche in der Lage, Wärme zu erzeugen. Insbesondere kann diese Wärme auch abgegeben werden. Damit die Heizfläche Wärme erzeugen kann, wird diese mit Energie zur Erzeugung von Heizwärme versorgt. Dabei kann die Heizfläche je nach Ausgestaltung der Heizeinrichtung auf unterschiedliche Weise mit Energie zur Erzeugung von Heizwärme versorgt werden, sowohl was die Beschaffenheit der Energie, als auch deren Zufuhr betrifft. Die Erfindung ist nicht auf bestimmte konkrete Ausgestaltungen beschränkt. Einige bevorzugte, jedoch nicht ausschließliche Beispiele werden im weiteren Verlauf der Beschreibung näher erläutert.

Erfindungsgemäß ist nunmehr vorgesehen, dass die Heizfläche aus einer Anzahl von zwei oder mehr Heizelementen gebildet ist. Dabei ist die Erfindung weder auf eine bestimmte Anzahl von Heizelementen, noch auf ein bestimmtes Anordnungsmuster der Heizelemente beschränkt. Auch ist die Erfindung grundsätzlich nicht auf bestimmte Typen von Heizelementen beschränkt. Wichtig ist lediglich, dass die Heizfläche eine Anzahl von Heizelementen aufweist und dass die Heizelemente in ihrer Gesamtheit die Heizfläche bilden. Insbesondere ist die Heizfläche in eine Anzahl von zwei oder mehr Heizelementen unterteilt. Die jeweils äußeren Heizelemente definieren dabei die äußere Begrenzung der Heizfläche. Die Heizfläche ist somit nicht mehr eine einzige, durchgängige Fläche. Vielmehr weist die Heizfläche eine Anzahl von Heizelementen auf. Mittels der Heizelemente wird die Wärme erzeugt, Die Heizelemente erhalten von einer Energiequelle Energie zum Erzeugen von Heizwärme. Diese Energie wird von den Heizelementen in Heizwärme umgesetzt. In anderer Ausgestaltung ist denkbar, dass durch das Bereitstellen der Energie am Heizelement in diesem Heizwärme erzeugt wird.

Bevorzugt ist vorgesehen, dass die Heizelemente als flächige Heizelemente ausgebildet sind. In diesem Fall stellen die Heizelemente Segmente der Heizfläche, so genannte Heizflächensegmente, dar. Die Heizfläche besteht in einem solchen Fall aus einer Anzahl von Heizflächensegmenten.

In anderer Ausgestaltung kann vorgesehen sein, dass die Heizeinrichtung aus einer einzigen, durchgängigen Heizfläche gebildet ist. In diesem Fall müssen die einzelnen Heizelemente auf andere Weise realisiert werden. Dies kann beispielsweise realisiert werden, in dem die Kontaktierung der Heizelemente entsprechend ausgebildet ist. Beispielsweise kann vorgesehen sein, dass die Kontakte geometrisch ausgebildet sind und auf die Heizfläche aufgebracht werden. In diesem Fall befindet sich die Heizfläche insbesondere zwischen den Kontaktierungen. Über die Kontaktierungen wird die Heizfläche mit Energie zur Erzeugung von Heizwärme versorgt. Dabei ist insbesondere vorgesehen, dass die Heizwärme nur im Bereich der Kontaktierung erzeugt wird. Wenn dann die Kontaktierungen entsprechend beabstandet voneinander sind, sowohl in vertikaler, als auch i horizontaler Ausrichtung, können dadurch wieder einzelne Heizelemente erzeugt werden. Eine solche Ausführungsform wird im Zusammenhang mit der Figurenbeschreibung näher erläutert, so dass an dieser Stelle auf die entsprechenden Ausführungen in der Figurenbeschreibung vollinhaltlich Bezug genommen und verwiesen wird.

Bevorzugt sind die Heizelemente beabstandet voneinander angeordnet. Damit wird sichergestellt, dass ein Energieübergang von einem Heizelement zu einem benachbarten, anderen Heizelement vermieden wird. In anderer Ausgestaltung können die einzelnen Heizelemente ohne Zwischenraum direkt aneinander angrenzen. In einem solchen Fall sind die Heizelemente bevorzugt durch Barriereelemente, insbesondere Isolatoren, voneinander getrennt. Die Barriereelemente verhindern den Energieübergang von einem Heizelement in ein anderes, benachbartes Heizelement.

Erfindungsgemäß ist nunmehr vorgesehen, dass jedes Heizelement an wenigstens einer Energiequelle zur Erzeugung von Heizwärme angeschlossen oder anschließbar ist. Dabei können, wie oben geschildert, unterschiedliche Energiequellen zum Einsatz kommen, so dass die Erfindung nicht auf bestimmte Ausführungsformen beschränkt ist.

Durch die Aufteilung der Heizfläche in eine Anzahl von Heizelementen, wobei jedes Heizelement zudem mit wenigstens einer Energiequelle zusammenwirkt, wird es nunmehr möglich, in einzelnen Bereichen der Heizfläche unterschiedlich Wärme zu erzeugen. Beispielsweise ist es möglich, innerhalb der Begrenzung der Heizfläche unterschiedliche Geometrien zu erzeugen, in denen Wärme erzeugt wird. Dies kann beispielsweise realisiert werden, indem nur einzelne Heizelemente mit Energie versorgt werden, so dass nur in diesen Heizelementen auch tatsächlich Wärme erzeugt wird, während andere Heizelemente inaktiv bleiben. Ebenfalls ist es möglich, innerhalb der Begrenzung der Heizfläche Bereiche mit unterschiedlicher Wärmeerzeugung zu realisieren. Das kann beispielsweise realisiert werden, indem unterschiedlichen Heizelementen unterschiedliche Energie zur Erzeugung von Heizwärme zugeführt wird. Wie dies im Einzelnen geschehen kann, wird im weiteren Verlauf der Beschreibung näher erläutert.

Vorzugsweise kann die Heizfläche der Heizeinrichtung, insbesondere deren Heizelemente, auf einem Substrat aufgetragen sein oder als auf ein Substrat aufbringbar ausgebildet sein. In anderer Ausgestaltung kann vorgesehen sein, dass ein aus einem entsprechend geeigneten Material bestehendes Substrat mit der Heizfläche der Heizeinrichtung, insbesondere deren Heizelementen, imprägniert wird. Bei einem solchen Substrat ist die Erfindung nicht auf bestimmte Formen oder Stoffe beschränkt. Beispielsweise sind glatte oder raue Untergründe möglich, die beispielsweise mit den Heizelementen beschichtet werden können. Dabei kann bei Bedarf beispielsweise ein Haftvermittler zum Einsatz kommen. Ebenso können beispielsweise alle Arten von Textilien und Fasern als Substrat dienen, beispielsweise Gewebe, Vliese, Fäden, Natur- und Kunstfasern und dergleichen. Diese Substrate können beispielsweise imprägniert werden.

Vorzugsweise kann jedes Heizelement an wenigstens einer Energiequelle zur Erzeugung von Heizwärme angeschlossen oder anschließbar sein. In diesem Fall ist insbesondere jedes Heizelement unabhängig von anderen Heizelementen an einer Energiequelle angeschlossen oder anschließbar, so dass jedes Heizelement unabhängig von anderen Heizelementen aktiviert und betätigt werden kann. Alternativ ist auch möglich, dass eine Gruppe aus wenigstens zwei Heizelementen an wenigstens einer gemeinsamen Energiequelle zur Erzeugung von Heizwärme angeschlossen oder anschließbar ist. Beispielsweise kann vorgesehen sein, dass jedes Heizelement an einer einzigen Energiequelle angeschlossen ist. Ebenso ist möglich, dass ein einzelnes Heizelement an mehreren Energiequellen angeschlossen ist, wobei diese Energiequellen dann bevorzugt zur Erzeugung einer unterschiedlichen Heizwärme ausgebildet sind. Kommt nur eine Energiequelle zum Einsatz, kann diese bevorzugt zur Erzeugung einer variablen Heizwärme ausgebildet sein. Auch ist es möglich, dass mehrere Heizelemente zu einer Gruppe zusammengefasst werden, und dass eine solche Gruppe aus Heizelementen an einer oder mehreren Energiequellen angeschlossen oder anschließbar ist. Bei den Heizelementen einer Gruppe wird dann jeweils die gleiche Heizwärme erzeugt. Unterschiedliche Gruppen von Heizelementen können an unterschiedlichen Energiequellen angeschlossen sein.

Bevorzugt kann die Heizeinrichtung als frei adressierbares Heizfeld mit frei adressierbaren Heizelementen ausgebildet sein. Dabei ist insbesondere jedes Heizelement oder jede Gruppe von Heizelementen über eine eigene Energiequelle zur Erzeugung von Heizwärme unabhängig von anderen Heizelementen oder Gruppen von Heizelementen adressierbar. Das bedeutet, dass jedes Heizelement beziehungsweise jede Gruppe aus Heizelementen, individuell und unabhängig von anderen Heizelementen mit Energie zur Erzeugung von Heizwärme versorgt wird, so dass in den Heizelementen, je nach Energiezufuhr, auch unterschiedliche Wärme erzeugt wird. Dadurch können sowohl beliebige Heizmuster, durch Adressierung von nur bestimmten Heizelementen, als auch beliebige Heizgrade an verschiedenen Stellen, durch Versorgung verschiedener Heizelemente mit unterschiedlich hoher Energie, realisiert werden.

Bevorzugt können die Heizelemente eine unterschiedliche Größe und/oder Form aufweisen und/oder die Heizelemente können räumlich beabstandet voneinander sein.

In einer bevorzugten Ausführungsform weisen sämtliche Heizelemente die gleiche Größe und/oder Form auf. Dadurch lässt sich auf besonders einfache Weise eine Heizfläche beziehungsweise eine Heizeinrichtung realisieren. In anderer Ausgestaltung kann vorgesehen sein, dass zumindest einzelne Heizelemente eine von den anderen Heizelementen abweichende Größe und/oder Form aufweisen. Dadurch kann jede beliebige Geometrie oder Kontur der Heizfläche realisiert werden.

Mit der erfindungsgemäßen Heizeinrichtung ist es möglich, jedes beliebige Muster von Heizflächen zu realisieren. Insbesondere ist die Heizfläche in Größe und/oder Form beliebig gestaltbar, so dass beliebig geometrisch adressierbare Heizeinrichtungen realisiert werden können. Auch ist es möglich, dass die einzelnen Heizelemente mit unterschiedlich hoher Energie zur Erzeugung von Heizwärme versorgt werden, so dass auch hinsichtlich der Grade an erzeugter Wärme jedes beliebige Muster realisiert werden kann.

Bevorzugt kann die Heizfläche als eine aus einer Anzahl von Heizelementen bestehende Heizelemente-Matrix ausgebildet sein. Dabei ist die Erfindung nicht auf eine bestimmte Anzahl oder Anordnung dieser Matrix-Heizelemente beschränkt.

In weiterer Ausgestaltung ist vorgesehen, dass zumindest einzelne Heizelemente wenigstens ein Temperatursensorelement aufweisen oder zum Zusammenwirken mit einem Temperatursensorelement ausgebildet sind. Damit kann für diese Heizelemente die Temperatur der erzeugten Heizwärme bestimmt werden.

Beispielsweise kann vorgesehen sein, dass ein Sensorelement für ein Heizelement vorgesehen ist. Auch ist denkbar, dass ein Sensorelement für eine größere Anzahl von Heizelementen, beispielsweise eine Gruppe von Heizelementen, zum Einsatz kommt. Auch können pro Heizelement oder Heizelementgruppe mehrere Sensorelemente zum Einsatz kommen.

Auf diese Weise wird es insbesondere möglich, über die Heizfläche unterschiedliche Temperaturen zu realisieren. Ebenso kann der Fall auftreten, dass die Heizeinrichtung verwendet wird, um ein Bauteil, beispielsweise eine Form zu erwärmen. Bauteile, insbesondere Formen, zeichnen sich in der Regel dadurch aus, dass sie Bereiche unterschiedlicher Dicke aufweisen. Wenn ein solches Bauteil gleichmäßig erwärmt werden soll, ist es erforderlich, in Bereichen größerer Dicke eine größere Heizleistung bereitzustellen als in Bereichen mit geringerer Dicke. Mit der vorliegenden Erfindung ist es auch möglich, Bauteile mit unterschiedlicher Dicke gleichmäßig zu beheizen beziehungsweise zu erwärmen, so dass die vorliegende Erfindung bevorzugt auch im Formenbau Anwendung finden kann.

Bevorzugt kann die Heizeinrichtung eine Steuereinrichtung aufweisen, die die Zufuhr an Energie zur Erzeugung von Heizwärme von den Energiequellen an die Heizelemente entsprechend steuert. Die Steuereinrichtung kann auch ausgebildet sein, um von Temperatursensorelementen erfasste Temperaturwerte auszuwerten und bei der Steuerung der Energiezufuhr zu den Heizelementen zu berücksichtigen.

Somit wird Steuerung der Heizfläche durch die Steuereinrichtung, beispielsweise einen Controller, und eine Ansteuerung der einzelnen Heizelemente durch die Steuereinrichtung, beispielsweise eine Steuerungselektronik, gegebenenfalls mit Adresscodierung, möglich. Damit lässt sich beispielsweise eine Heizeinrichtung in Form eines Displays darstellen, das nicht im optischen, sondern im infraroten Bereich emittiert. Auch eine Ansteuerung von Einzelfeldern wird somit möglich.

Wie oben schon ausgeführt wurde, kann die Heizeinrichtung auf verschiedenen technologischen Prinzipien beruhen, so dass die Erfindung nicht auf bestimmte, konkrete Ausführungen beschränkt ist. Beispielsweise kann vorgesehen sein, dass die Heizeinrichtung Energiequellen aufweist, die auf chemischen Reaktionen beruhen. Es ist beispielsweise bekannt, dass das Zusammenführen bestimmter Chemikalien mit der Erzeugung von Wärme einhergeht. Beispielsweise könnte in einem solchen Fall jedes Heizelement eine für eine solche Reaktion erforderliche erste Chemikalie enthalten. Die Energiequelle könnte dann die erforderliche zweite Chemikalie bereitstellen. Wird die Energiequelle an das Heizelement angeschlossen und kommt die zweite Chemikalie mit der ersten Chemikalie in Berührung; entsteht eine Reaktion, in deren Verlauf Wärme erzeugt wird.

Bevorzugt ist die Heizeinrichtung jedoch als elektrische Heizeinrichtung ausgebildet. In einem solchen Fall ist jedes Heizelement über elektrische Kontakte an einer elektrischen Energieversorgung angeschlossen oder anschließbar. Im weiteren Verlauf wird diese bevorzugte Ausgestaltungsform in größerem Detail beschrieben. Vorzugsweise kann in einem solchen Fall vorgesehen sein, dass die elektrischen Kontakte als voneinander beabstandete elektrische Leiterbahnen ausgebildet sind. Dabei ist die Erfindung nicht auf eine bestimmte Anzahl von Leiterbahnen beschränkt. Ebenso ist die Erfindung nicht auf bestimmte Abstände beschränkt, in denen die elektrischen Leiterbahnen voneinander beabstandet sind. Je geringer der Abstand der Leiterbahnen zueinander ist, desto kleiner können die Heizelemente ausgebildet sein, und desto feiner lässt sich Wärmeerzeigung innerhalb der gesamten Heizfläche einstellen. Auch ist die Erfindung nicht auf eine bestimmte Richtung der Beabstandung beschränkt. Beispielsweise können die Leiterbahnen horizontal und/oder vertikal voneinander beabstandet sein. Einige vorteilhafte, jedoch nicht ausschließliche Beispiele hierzu werden nachfolgend in größerem Detail beschreiben.

Bevorzugt kann vorgesehen sein, dass die elektrischen Kontakte wenigstens zwei von einander beabstandete Lagen von voneinander beabstandeten elektrischen Leiterbahnen aufweisen, und dass die Heizelemente zwischen den Lagen, insbesondere im Bereich der Kreuzungspunkte der elektrischen Leiterbahnen vorgesehen sind. Das bedeutet insbesondere, dass die Leiterbahnen einer Lage geometrisch auf der gleichen Höhe oder aber zumindest im Wesentlichen auf der gleichen Höhe angeordnet sind. Insbesondere ist vorgesehen, dass die Leiterbahnen der einen Lage senkrecht zu den Leiterbahnen der anderen Lage ausgerichtet sind. Hierbei handelt es sich insbesondere um eine vertikale Beabstandung der Leiterbahnen. Natürlich ist es auch möglich, dass die Leiterbahnen der beiden Lagen in einem anderen Winkel zueinander ausgerichtet sind. Ebenso ist es möglich, dass die Leiterbahnen jeder Lage parallel zueinander ausgerichtet sind. Dadurch, dass die Heizelemente zwischen den Leiterbahnenlagen vorgesehen sind, können die Leiterbahnen der beiden Lagen nicht in direkten Kontakt miteinander kommen, was zu einem Kurzschluss führen würde.

Alternativ oder zusätzlich kann auch vorgesehen sein, dass die elektrischern Kontakte sich kreuzende, voneinander beabstandete elektrische Leiterbahnen aufweisen, die in einer Lage vorgesehen sind. Das bedeutet, dass sich alle Leiterbahnen in ein und derselben Lage befinden. Hierbei handelt es sich dann insbesondere um eine horizontale Beabstandung der Leiterbahnen. In diesem Fall ist vorgesehen, dass sich kreuzende elektrische Leiterbahnen in den Kreuzungspunkten gegeneinander isoliert sind, was durch entsprechende Isoliermittel realisiert werden kann. In einem solchen Fall ist jedes Heizelement mit zwei sich kreuzenden elektrischen Leiterbahnen kontaktiert. Bei dieser Ausführungsform befinden sich die Heizelemente bevorzugt in derselben Lage wie die Leiterbahnen. Es ist aber auch möglich, dass sich die Heizelemente oberhalb oder unterhalb der Leiterbahnen-Lage befinden.

Wie weiter oben schon ausgeführt wurde, ist die Erfindung nicht auf eine bestimmte Ausführung der Heizelemente beschränkt. Bevorzugt ist vorgesehen, dass die Heizelemente als flächige Heizelemente ausgebildet sind. In einem solchen Fall können die Heizelemente beispielsweise als leitfähige Zubereitung, insbesondere als elektrisch und/oder thermisch leitfähige Zubereitung, ausgebildet sein. Bei einer leitfähigen Zubereitung handelt es sich insbesondere um eine Zubereitung, die über ein Trägermaterial, beispielsweise ein Kunststoffmaterial, verfügt, in dem sich ein oder mehrere Leitfähigkeitsadditive befinden. Die Leitfähigkeitsadditive können beispielsweise auf Kohlenstoffbasis ausgebildet sein. Bei solchen Leitfähigkeitsadditiven kann es sich beispielsweise um Graphit und/oder Kohlenstoff-Nanomaterialien und/oder Ruß, und dergleichen handeln. Eine leitfähige Zubereitung hat insbesondere den Vorteil, dass diese besonders schnell erhitzt und wieder abgekühlt werden kann, und zwar insbesondere aufgrund eines hohen Stroms und einer vernachlässigbaren thermischen Masse.

Bevorzugt kann die leitfähige Zubereitung nach außen mit einer isolierenden Schicht, insbesondere einer thermisch und/oder elektrisch isolierenden Schicht, abgedeckt sein. Eine solche Isolierung ist insbesondere dann von Vorteil beziehungsweise erforderlich, wenn die leitfähige Zubereitung elektrisch bestromt wird.

Vorzugsweise ist ein Heizelement, bei dem es sich um eine leitfähige Zubereitung handelt, mit elektrischen Kontakten versehen, über die eine elektrische Spannung an die leitfähige Zubereitung angelegt werden kann. Über den durch die Zubereitung fließenden elektrischen Strom kann die leitfähige Zubereitung dann in gewünschter Weise beheizt werden. In anderer Ausgestaltung werden die elektrischen Kontakte mit dem Heizelement, das heißt der leitfähigen Zubereitung, verbunden, was beispielsweise mittels Klemmeinrichtungen erfolgen kann.

Die leitfähigen Zubereitungen können vorteilhaft thermisch und/oder elektrisch leitend ausgebildet sein. Bevorzugt ist vorgesehen, dass die Zubereitung elektrisch leitend ausgebildet ist. Eine derartige Zubereitung ist durch die Verwendung des wenigstens einen Leitfähigkeitsadditivs niederohmig, was zu einer guten elektrischen Leitfähigkeit führt, da beispielsweise nur ein geringer elektrischer Widerstand vorhanden ist. Dadurch kann eine homogene Beheizbarkeit realisiert werden. Durch die Niederohmigkeit ist zudem gewährleistet, dass an die Zubereitung nur geringe Spannungen angelegt werden müssen, um eine gute Beheizung zu erreichen.

In anderer Ausgestaltung können die Heizelemente als leitfähige Beschichtung ausgebildet sein, wobei eine solche Beschichtung bevorzugt auf einer wie vorstehend beschriebenen leitfähigen Zusammensetzung basiert. Bei einer Beschichtung handelt es sich insbesondere um eine fest haftende Schicht aus formlosem Stoff auf einem Substrat, beispielsweise auf der Oberfläche eines Werkstücks. Eine solche Beschichtung kann beispielsweise zunächst in flüssiger Form vorliegen, so dass die Beschichtung besonders einfach auf einem Substrat aufgebracht werden kann. Im weiteren Verlauf kann die Beschichtung dann trocknen und fest werden. Beschichtungen haben insbesondere den Vorteil, dass sie auf beliebigen, auch komplizierten, Geometrien problemlos aufgebracht werden können.

In anderer Ausgestaltung können die Heizelemente auch als leitfähige Paste und/oder als leitfähige Folie ausgebildet sein. Auch derartige Heizelemente können bevorzugt auf einer wie vorstehend beschriebenen leitfähigen Zusammensetzung basieren.

Bevorzugt ist vorgesehen, dass die Heizelemente auf Basis von Kohlenstoffmaterialien und/oder Kohlenstoff-Makromaterialien und/oder Kohlenstoff-Nanomaterialien ausgebildet sind, beispielsweise in Form einer Beschichtung oder einer Imprägnierung. Auch ist es denkbar dass eine Irgendwie geartete Zusammensetzung aus Kohlenstoffmaterialien mit Kohlenstoff-Nanomaterialien zum Einsatz kommt. Je nach Ausgestaltung bestehen solche Heizelemente insbesondere aus einer entsprechenden Bindermatrix und einer auf den jeweiligen Anwendungsfall abgestimmten Kohlenstoffformulierung. Aufgrund der hervorragenden Konduktivität können hohe Heizleistungen mit ungefährlicher Niederspannung realisiert werden, wobei zudem eine gleichmäßige Wärmestrahlung ohne so genannte Hot Spots realisiert werden kann.

Bevorzugt kann die Heizeinrichtung als geometrisch einstellbares Heizfeld und/oder zur Simulation von Infrarot-Signaturen ausgebildet sein. Das bedeutet, dass die Heizeinrichtung als geometrisch einstellbares Heizfeld und/oder zur Simulation von Infrarot-Signaturen verwendet werden kann. Die Einstellbarkeit des Heizfeldes schließt insbesondere mit ein, dass das Heizfeld geometrisch adressiert, angepasst, variiert und dergleichen werden kann.

Eine solche Heizeinrichtung kann beispielsweise dazu dienen, durch Aktivierung entsprechender Heizelemente, jede beliebige Form einer Heizfläche zu realisieren, sowohl hinsichtlich der Größe und Form innerhalb der vorgegebenen Grenzen der Heizfläche als auch hinsichtlich der Intensität der erzeugten und abgegebenen Wärmestrahlung. Damit lassen sich beispielsweise beliebige Infrarot-Signaturen simulieren. Die Erfindung ist insbesondere auch in solchen Fällen einsetzbar, in denen bestimmte Bereiche einer Fläche gezielt beheizt werden sollen. Beispielsweise lassen sich an bestimmte Vorgaben angepasste Wärmeflächen einstellen. Ein Vorteil hierbei ist beispielsweise die Minimierung der eingesetzten Energie, weil nur dort geheizt wird, wo es notwendig ist. Durch Rückkopplung mit den entsprechenden Sensordaten von Temperatursensorelementen wird zudem nur so stark wie nötig geheizt. Solche Wärmeflächen können beispielsweise zum Einsatz kommen im Bereich des Warmhaltens von Speisen, im Bereich beheizbarer Tische für unterschiedlichen Zwecke, etwa für das Restaurieren von Bildern, von Vorteil sein kann. Die möglichen Einsatzgebiete der erfindungsgemäßen Heizeinrichtung erstrecken sich über eine große Bandbreite von weiteren Applikationen, wie beispielsweise Flächenheizungen, etwa für Fahrzeuge, Fußbodenheizungen, Wandheizungen, Heizungen im Maschinen- und Anlagenbau, Heizungen für Formen, Heizungen für verschiedene Geräte, Frostschutzeinrichtungen, und dergleichen. Auch zur Steuerung der Freisetzung von Düften kann die erfindungsgemäße Heizeinrichtung eingesetzt werden, etwa wenn diese nur bei erhöhter Temperatur freigesetzt werden.

Weiterhin ist bevorzugt, dass die Heizelemente mit beliebigen temperaturabhängigen Funktionalitäten kombiniert werden, beispielsweise mit pyroelektrischen Materialien, mit thermochromen Materialien und dergleichen.

Weiterhin kann die Heizeinrichtung Mittel zur thermischen Isolierung der einzelnen Heizelemente gegeneinander aufweisen.

In weiterer Ausgestaltung kann die Heizfläche, oder können die Heizelemente mit wenigstens einer Kühleinrichtung, beispielsweise mit Kühlkanälen kombiniert sein, so dass die einzelnen Heizelemente insbesondere thermisch nicht aneinander gekoppelt sind.

Weiterhin kann die Heizfläche, oder können die Heizelemente mit einer Sensorik kombiniert sein, die erfassen kann, wann ein Heizelement belegt ist und dann die Beheizung ein- oder ausschaltet: Beispielsweise kann die Heizfläche beziehungsweise wenigstens ein Heizelement eingeschaltet werden, wenn ein Gegenstand, beispielsweise ein Topf, darauf abgestellt wird, beispielsweise wenn die Heizfläche als Warmhaltefläche ausgebildet ist.

Durch eine Steuerung der Heizfläche durch eine Steuereinrichtung, etwa einen Controller, und die Ansteuerung der einzelnen Heizelemente durch eine Steuerungselektronik, optional mit Adresscodierung, lässt sich beispielsweise ein Display darstellen, das nicht im optischen, sondern im infraroten Bereich emittiert. Auch eine Ansteuerung von Einzelfeldern, zum Beispiel in der Laboranalytik, wird somit möglich, etwa bei Reihenuntersuchungen, bei denen eine Vielzahl von Gefäßen systematisch temperiert werden müssen.

Die Heizeinrichtung gemäß der vorliegenden Erfindung kann insbesondere ein in Größe und/oder Form und/oder Heizleistung einstellbares Heizfeld aufweisen.

Gemäß dem zweiten Aspekt der Erfindung wird ein Verfahren zum Betreiben einer Heizeinrichtung, insbesondere einer wie vorstehend beschriebenen erfindungsgemäßen Heizeinrichtung, bereitgestellt, wobei die Heizeinrichtung eine Heizfläche aufweist, die mit Energie zur Erzeugung von Heizwärme versorgt wird, wobei die Heizfläche aus einer Anzahl von zwei oder mehr Heizelementen gebildet ist, wobei die Heizelemente insbesondere als flächige Heizelemente ausgebildet sind, und wobei jedes Heizelement an wenigstens einer Energiequelle zur Erzeugung von Heizwärme angeschlossen ist, oder eine Gruppe aus wenigstens zwei Heizelementen an wenigstens einer gemeinsamen Energiequelle zur Erzeugung von Heizwärme angeschlossen ist. Das Verfahren ist durch die Schritte gekennzeichnet, dass jedes Heizelement oder jede Gruppe von Heizelementen über eine eigene Energiequelle zur Erzeugung von Heizwärme unabhängig von anderen Heizelementen oder Gruppen von Heizelementen mit Energie zur Erzeugung von Heizwärme versorgt wird.

Bezüglich der weiteren Ausgestaltung und Funktionsweise des erfindungsgemäßen Verfahrens wird auch auf die vorstehenden Ausführungen zur erfindungsgemäßen Heizeinrichtung vollinhaltlich Bezug genommen und verwiesen, so dass Merkmale und Details, die im Zusammenhang mit der Heizeinrichtung beschrieben sind, hinsichtlich der Offenbarung vollinhaltlich auch im Zusammenhang mit dem erfindungsgemäßen Verfahren gelten.

Die vorliegende Erfindung betrifft insbesondere eine Heizeinrichtung und ein Verfahren zum Betreiben einer Heizeinrichtung, wobei die Heizeinrichtung eine Heizfläche aufweist, die mit Energie zur Erzeugung von Heizwärme versorgt wird. Um zu ermöglichen, dass die Heizfläche nur partiell aktiviert werden kann, oder aber unterschiedliche Heizgrade an unterschiedlichen Stellen der Heizfläche oder aber verschiedene Heizmuster realisiert werden können, ist vorgesehen, dass die Heizfläche aus einer Anzahl von zwei oder mehr Heizelementen gebildet ist, wobei die Heizelemente insbesondere als flächige Heizelemente ausgebildet sind, und wobei jedes Heizelement an wenigstens einer Energiequelle zur Erzeugung von Heizwärme angeschlossen ist, oder eine Gruppe aus wenigstens zwei Heizelementen an wenigstens einer gemeinsamen Energiequelle zur Erzeugung von Heizwärme angeschlossen ist. Das Verfahren ist durch die Schritte gekennzeichnet, dass jedes Heizelement oder jede Gruppe von Heizelementen über eine eigene Energiequelle zur Erzeugung von Heizwärme unabhängig von anderen Heizelementen oder Gruppen von Heizelementen mit Energie zur Erzeugung von Heizwärme versorgt wird.

Nachfolgend wird die Erfindung anhand bevorzugter Ausführungsbeispiele unter Bezugnahme auf die beiliegenden Zeichnungen näher erläutert. Es zeigen
- Figur 1: ein erstes Ausführungsbeispiel einer erfindungsgemäßen Heizeinrichtung;
- Figur 2: ein zweites Ausführungsbeispiel einer erfindungsgemäßen Heizeinrichtung;
- Figur 3: ein drittes Ausführungsbeispiel einer erfindungsgemäßen Heizeinrichtung;
- Figur 4: ein viertes Ausführungsbeispiel einer erfindungsgemäßen Heizeinrichtung;
- Figur 5: ein fünftes Ausführungsbeispiel einer erfindungsgemäßen Heizeinrichtung in Explosionsdarstellung; und
- Figur 6: das in Figur 5 dargestellte Ausführungsbeispiel in zusammengebautem Zustand.

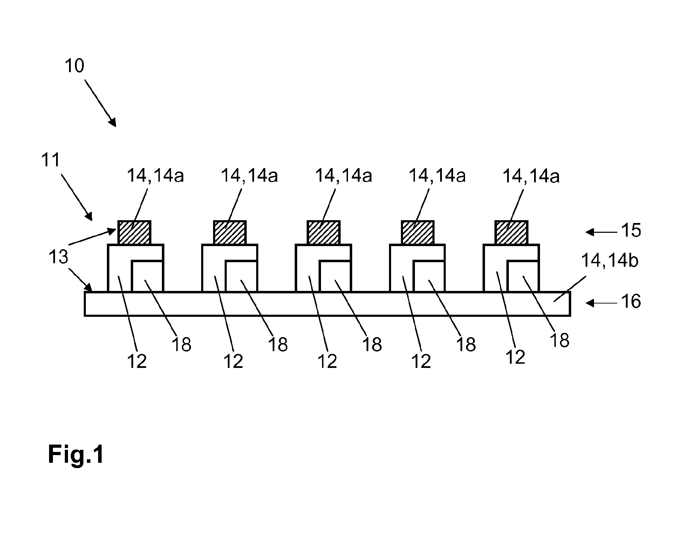

In den Figuren 1 bis 4 ist eine Heizeinrichtung 10 dargestellt, die als elektrische Heizeinrichtung ausgebildet ist. Die Heizeinrichtung 10 verfügt jeweils über eine Heizfläche 11, wobei die Heizfläche 11 aus einer Anzahl von Heizelementen 12 gebildet ist. Die Heizelemente 12 sind beabstandet voneinander in Form einer Heizelemente-Matrix angeordnet. Die Heizelemente 12 können bevorzugt in Form einer leitfähigen Zubereitung und/oder einer leitfähigen Beschichtung und/oder einer leitfähigen Paste und/oder einer leitfähigen Folie ausgebildet sein. Über die Heizelemente 12 kann die Heizeinrichtung 10 Wärme erzeugen. Dazu sind die Heizelemente 12 mit einer Energiequelle 13 zur Erzeugung von Energie, insbesondere einer elektrischen Energiequelle verbunden.

Hierzu sind elektrische Kontakte 14 vorgesehen, die in Form von Leiterbahnen 14a, 14b angeordnet sind, wobei die Leiterbahnen 14a, 14b jeweils beabstandet voneinander vorgesehen sind. Je geringer der Abstand der Leiterbahnen 14a, 14b, zueinander ist, desto kleiner können die Heizelemente 12 ausgebildet sein, und desto feiner lässt sich Wärmeerzeigung innerhalb der gesamten Heizfläche 11 einstellen.

In dem Ausführungsbeispiel gemäß Figur 1 ist vorgesehen, dass die elektrischen Kontakte 14 wenigstens zwei von einander beabstandete Lagen 15, 16 von voneinander beabstandeten elektrischen Leiterbahnen 14a, 14b aufweisen. Die Heizelemente 12 sind zwischen den Lagen 15, 16, insbesondere im Bereich der Kreuzungspunkte der elektrischen Leiterbahnen 14a, 14b vorgesehen. Insbesondere ist vorgesehen, dass die Leiterbahnen 14a der einen Lage 15 senkrecht zu den Leiterbahnen 14b der anderen Lage 16 ausgerichtet sind. Dadurch, dass die Heizelemente 12 zwischen den Leiterbahnenlagen 15, 16 vorgesehen sind, können die Leiterbahnen 14a, 14b der beiden Lagen 15, 16 nicht in direkten Kontakt miteinander kommen, was zu einem Kurzschluss führen würde.

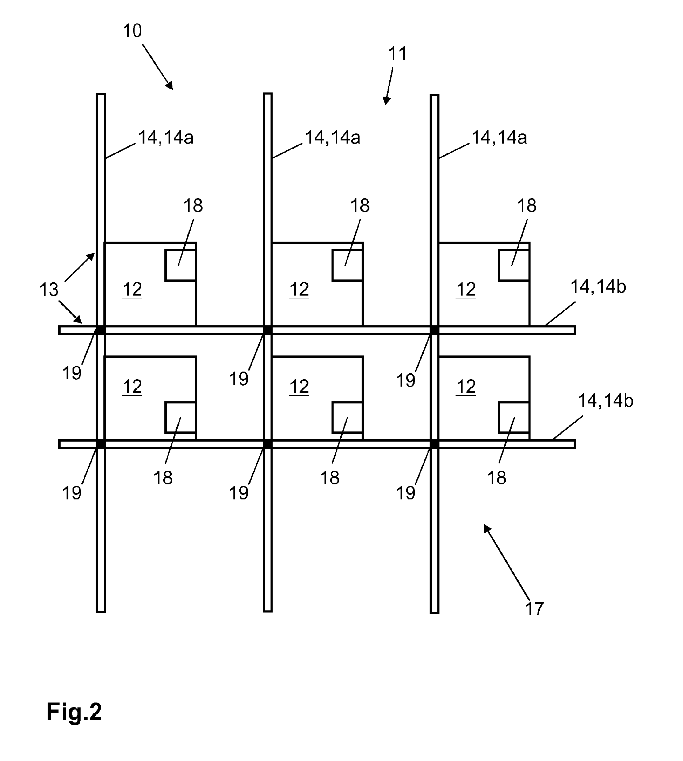

In dem Ausführungsbeispiel gemäß Figur 2 ist vorgesehen, dass die elektrischern Kontakte 14 sich kreuzende, voneinander beabstandete elektrische Leiterbahnen 14a, 14b aufweisen, die in ein und derselben Lage 17 vorgesehen sind. In diesem Fall ist vorgesehen, dass sich kreuzende elektrische Leiterbahnen 14a, 14b in den Kreuzungspunkten 19 gegeneinander isoliert sind, was durch entsprechende Isoliermittel realisiert werden kann. In einem solchen Fall ist jedes Heizelement 12 mit zwei sich kreuzenden elektrischen Leiterbahnen 14a, 14b kontaktiert. Bei dieser Ausführungsform befinden sich die Heizelemente 12 bevorzugt in derselben Lage wie die Leiterbahnen 14a, 14b.

In beiden Ausführungsbeispielen ist vorgesehen, dass zumindest einzelne Heizelemente 12 ein Temperatursensorelement 18 aufweisen. Damit kann für diese Heizelemente 12 die Temperatur der erzeugten Heizwärme bestimmt werden. Auf diese Weise wird es insbesondere möglich, über die Heizfläche 11 unterschiedliche Temperaturen zu realisieren.

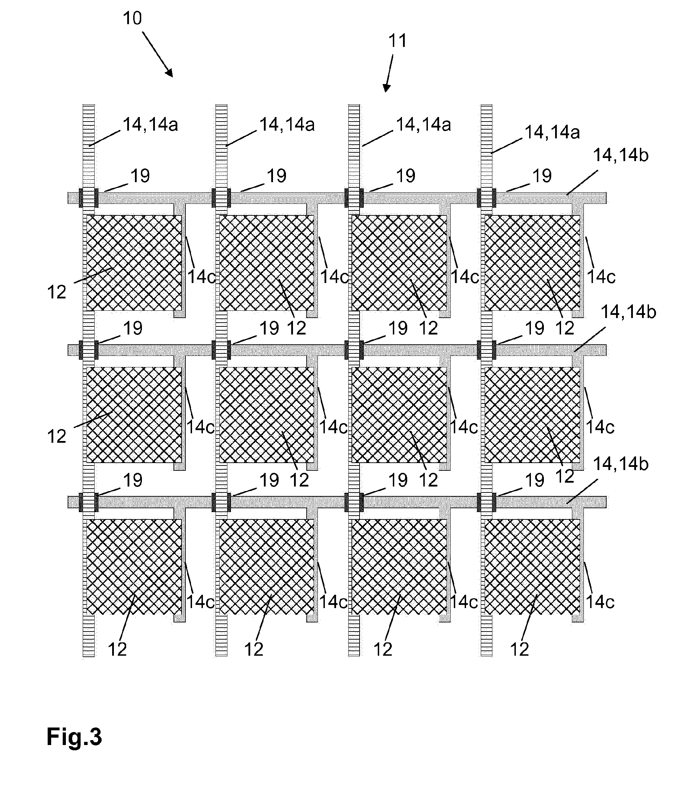

In Figur 3 ist eine Heizeinrichtung 10 dargestellt, die von ihrem Grundaufbau der in Figur 2 dargestellten Heizeinrichtung entspricht, so dass bezüglich der Ausgestaltung und Funktionsweise zunächst auf die Ausführungen von Figur 2 verwiesen wird. Auch sind zur Vereinfachung einige der in Figur 2 dargestellten Elemente in Figur 3 nicht dargestellt. Diese Elemente können aber sehr wohl auch Bestandteil der in Figur 3 dargestellten Heizeinrichtung 10 sein. Im Unterschied zu dem in Figur 2 dargestellten Ausführungsbeispiel weist die Heizeinrichtung 10 gemäß Figur 3 eine andere Kontaktierung der Heizelemente 12 mit den elektrischen Leiterbahnen 14, 14b auf. Gemäß Figur 3 weisen die Leiterbahnen 14, 14b zusätzliche Leiterbahnabschnitte14c auf, so dass eine Kontaktierung der Heizelemente 12 mit parallel verlaufenden, an gegenüberliegenden Seiten der Heizelemente 12 vorgesehenen Leiterbahnen erfolgt.

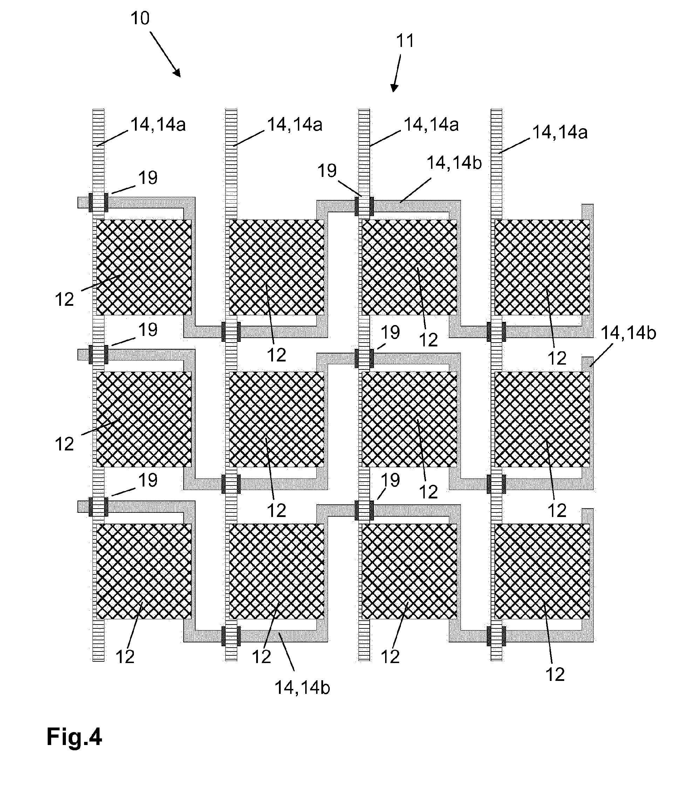

In Figur 4 ist eine Heizeinrichtung 10 dargestellt, die von ihrem Grundaufbau der in den Figuren 2 und 3 dargestellten Heizeinrichtung entspricht, so dass bezüglich der Ausgestaltung und Funktionsweise zunächst auf die Ausführungen zu den Figuren 2 und 3 verwiesen wird. Auch sind zur Vereinfachung einige der in den Figuren 2 und 3 dargestellten Elemente in Figur 4 nicht dargestellt. Diese Elemente können aber sehr wohl auch Bestandteil der in Figur 4 dargestellten Heizeinrichtung 10 sein. Im Unterschied zu dem in den Figuren 2 und 3 dargestellten Ausführungsbeispiel weist die Heizeinrichtung 10 gemäß Figur 3 eine andere Kontaktierung der Heizelemente 12 mit den elektrischen Leiterbahnen 14, 14b auf, wobei insbesondere der Verlauf der Leiterbahnen 14, 14b ein anderer ist. Damit lässt sich eine Kontaktierung der Heizelemente 12 mit parallel verlaufenden, an gegenüberliegenden Seiten der Heizelemente 12 vorgesehenen Leiterbahnen realisieren, ohne dass die in Figur 3 dargestellten zusätzlichen Leiterbahnabschnitte 14c erforderlich sind.

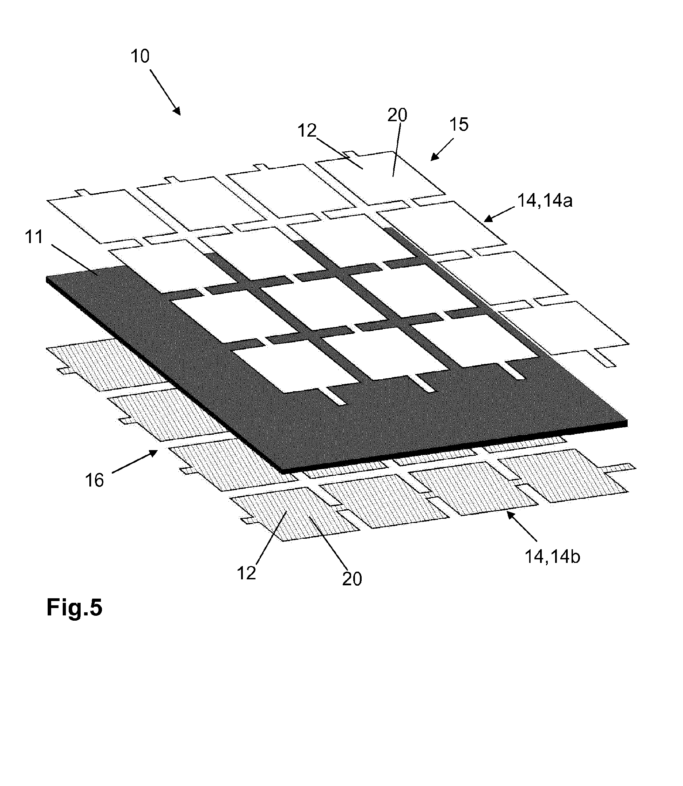

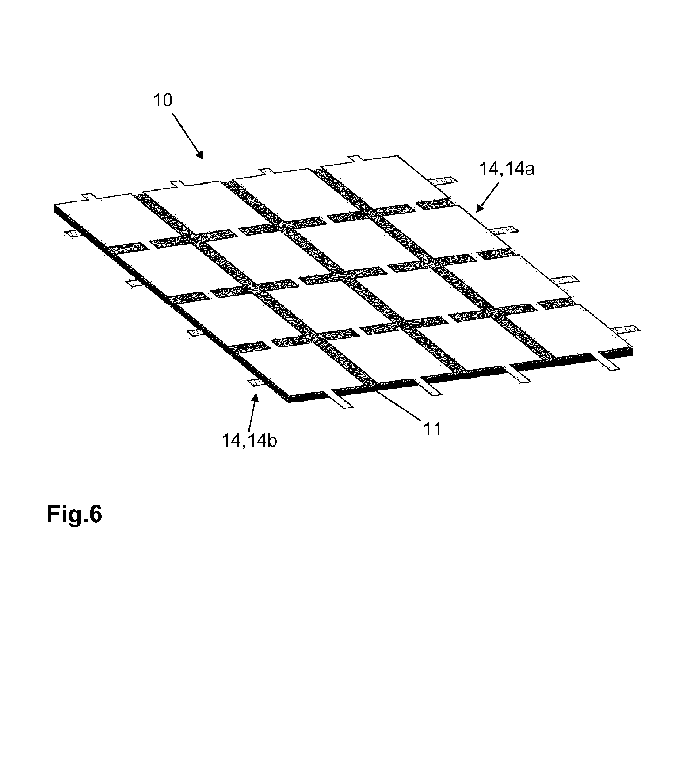

Das in den Figuren 5 und 6 dargestellte Ausführungsbeispiel zeigt eine Heizeinrichtung 10 mit einer etwas anders ausgebildeten Ausgestaltung. Die Heizeinrichtung 10 weist eine durchgängige Heizfläche 11 auf, wobei die einzelnen Heizelemente 12 durch eine besondere Ausgestaltung der elektrischen Kontaktierung realisiert sind.

Wie bei dem Ausführungsbeispiel gemäß Figur 1, weisen die elektrischen Kontakte 14 wenigstens zwei von einander beabstandete Lagen 15, 16 von voneinander beabstandeten elektrischen Leiterbahnen 14a, 14b auf. Die Heizfläche 11 ist zwischen den Lagen 15, 16, vorgesehen. Insbesondere ist vorgesehen, dass die Leiterbahnen 14a der einen Lage 15 senkrecht zu den Leiterbahnen 14b der anderen Lage 16 ausgerichtet sind. Dadurch, dass die Heizelemente 12 zwischen den Leiterbahnenlagen 15, 16 vorgesehen sind, können die Leiterbahnen 14a, 14b der beiden Lagen 15, 16 nicht in direkten Kontakt miteinander kommen, was zu einem Kurzschluss führen würde. Die Leiterbahnen 14a, 14b weisen in Abständen flächig ausgebildete Bereiche 20 aus, die beim vorliegenden Ausführungsbeispiel die Heizelemente 12, insbesondere hinsichtlich Größe und/oder Form definieren. Einander gegenüberliegende flächige Bereiche 20 versorgen die dazwischen liegende Heizfläche 11 nur im Bereich der Kontaktierung, und damit im Bereich der jeweiligen Fläche, mit elektrischer Energie, so dass durch die entsprechende Ausgestaltung der Leiterbahnen 14a, 14b, insbesondere von deren flächig ausgebildeten Bereichen 20, ebenfalls von einander beabstandete Heizelemente 12 entstehen.

Mit der erfindungsgemäßen Heizeinrichtung 10, die in den Ausführungsbeispielen gemäß den Figuren 1 bis 6 dargestellt ist, ist es möglich, jedes beliebige Muster innerhalb der Begrenzung der Heizfläche 11 zu realisieren. Insbesondere ist die Heizfläche 11 innerhalb der Begrenzung in Größe und/oder Form beliebig gestaltbar, so dass beliebig geometrisch adressierbare Heizeinrichtungen 10 realisiert werden können. Auch ist es möglich, dass die einzelnen Heizelemente 12 mit unterschiedlich hoher Energie zur Erzeugung von Heizwärme versorgt werden, so dass auch hinsichtlich der Grade an erzeugter Wärme jedes beliebige Muster realisiert werden kann.

### Bezugszeichenliste

- 10: Heizeinrichtung
- 11: Heizfläche
- 12: Heizelement
- 13: Energiequelle zur Erzeugung von Heizwärme
- 14: Elektrischer Kontakt
- 14a: Elektrische Leiterbahn
- 14b: Elektrische Leiterbahn
- 14c: Leiterbahnabschnitt
- 15: Lage von Leiterbahnen
- 16: Lage von Leiterbahnen
- 17: Lage von Leiterbahnen
- 18: Temperatursensorelement
- 19: Kreuzungspunkt von Leiterbahnen (isoliert)
- 20: Flächig ausgebildeter Bereich der Leiterbahnen

## Patentansprüche

1. Heizeinrichtung (10), aufweisend eine Heizfläche (11), die mit Energie zur Erzeugung von Heizwärme versorgt wird oder versorgbar ist, **dadurch gekennzeichnet, dass** die Heizfläche (11) aus einer Anzahl von zwei oder mehr Heizelementen (12) gebildet ist, dass die Heizelemente (12) insbesondere als flächige Heizelemente (12) ausgebildet sind, und dass jedes Heizelement (12) an wenigstens einer Energiequelle (13) zur Erzeugung von Heizwärme angeschlossen oder anschließbar ist.

2. Heizeinrichtung nach Anspruch 1, **dadurch gekennzeichnet, dass** jedes Heizelement (12) an wenigstens einer Energiequelle (13) zur Erzeugung von Heizwärme angeschlossen oder anschließbar ist oder dass eine Gruppe aus wenigstens zwei Heizelementen (12) an wenigstens einer gemeinsamen Energiequelle (13) zur Erzeugung von Heizwärme angeschlossen oder anschließbar ist.

3. Heizeinrichtung nach Anspruch 1 oder 2, **dadurch gekennzeichnet, dass** die Heizeinrichtung (10) als frei adressierbares Heizfeld mit frei adressierbaren Heizelementen (12) ausgebildet ist, und dass jedes Heizelement (12) oder jede Gruppe von Heizelementen (12) über eine eigene Energiequelle (13) zur Erzeugung von Heizwärme (12) unabhängig von anderen Heizelementen (12) oder Gruppen von Heizelementen (12) adressierbar ist.

4. Heizeinrichtung nach Anspruch einem der Ansprüche 1 bis 3, **dadurch gekennzeichnet, dass** die Heizelemente (12) eine unterschiedliche Größe und/oder Form aufweisen und/oder dass die Heizelemente (12) räumlich beabstandet voneinander sind.

5. Heizeinrichtung nach einem der Ansprüche 1 bis 4, **dadurch gekennzeichnet, dass** die Heizfläche (11) als eine aus einer Anzahl von Heizelementen (12) bestehende Heizelemente-Matrix ausgebildet ist.

6. Heizeinrichtung nach einem der Ansprüche 1 bis 5, **dadurch gekennzeichnet, dass** zumindest einzelne Heizelemente (12) ein Temperatursensorelement (18) aufweisen oder zum Zusammenwirken mit einem Temperatursensorelement (18) ausgebildet sind.

7. Heizeinrichtung nach einem der Ansprüche 1 bis 6, **dadurch gekennzeichnet, dass** die Heizeinrichtung (10) als elektrische Heizeinrichtung ausgebildet ist und dass jedes Heizelement (11) über elektrische Kontakte (14) an einer elektrischen Energieversorgung angeschlossen oder anschließbar ist.

8. Heizeinrichtung nach Anspruch 7, **dadurch gekennzeichnet, dass** die elektrischen Kontakte (14) als voneinander beabstandete elektrische Leiterbahnen (14a, 14b) ausgebildet sind.

9. Heizeinrichtung nach Anspruch 8, **dadurch gekennzeichnet, dass** die elektrischen Kontakte (14) wenigstens zwei von einander beabstandete Lagen (15, 16) von voneinander beabstandeten elektrischen Leiterbahnen (14a, 14b) aufweisen, und dass die Heizelemente (12) zwischen den Lagen (15, 16), insbesondere im Bereich der Kreuzungspunkte der elektrischen Leiterbahnen (14a, 14b) vorgesehen sind, und/oder dass die elektrischern Kontakte (14) sich kreuzende, voneinander beabstandete elektrische Leiterbahnen (14a, 14b) aufweisen, die in einer Lage (17) vorgesehen sind, dass sich kreuzende elektrische Leiterbahnen (14a, 14b) in den Kreuzungspunkten (19) gegeneinander isoliert sind und dass jedes Heizelement (12) mit zwei sich kreuzenden elektrischen Leiterbahnen (14a, 14b) kontaktiert ist.

10. Heizeinrichtung nach einem der Ansprüche 1 bis 9. **dadurch gekennzeichnet, dass** die Heizelemente (12) als leitfähige Zubereitung und/oder als leitfähige Beschichtung und/oder als leitfähige Paste und/oder als leitfähige Folie ausgebildet sind.

11. Heizeinrichtung nach einem der Ansprüche 1 bis 10, **dadurch gekennzeichnet, dass** diese als geometrisch einstellbares Heizfeld und/oder zur Simulation von Infrarot-Signaturen ausgebildet ist.

12. Verfahren zum Betreiben einer Heizeinrichtung (10), insbesondere einer Heizeinrichtung nach einem der Ansprüche 1 bis 11, wobei die Heizeinrichtung (10) eine Heizfläche (11) aufweist, die mit Energie zur Erzeugung von Heizwärme versorgt wird, wobei die Heizfläche (11) aus einer Anzahl von zwei oder mehr Heizelementen (12) gebildet ist, wobei die Heizelemente (12) insbesondere als flächige Heizelemente ausgebildet sind, und wobei jedes Heizelement (12) an wenigstens einer Energiequelle (13) zur Erzeugung von Heizwärme angeschlossen ist, oder eine Gruppe aus wenigstens zwei Heizelementen (12) an wenigstens einer gemeinsamen Energiequelle (13) zur Erzeugung von Heizwärme angeschlossen ist, **gekennzeichnet durch** die Schritte, dass jedes Heizelement (12) oder jede Gruppe von Heizelementen (12) über eine eigene Energiequelle (13) zur Erzeugung von Heizwärme unabhängig von anderen Heizelementen (12) oder Gruppen von Heizelementen (12) mit Energie zur Erzeugung von Heizwärme versorgt wird.
